# EUROPEAN PATENT APPLICATION

(11) **EP 4 556 981 A1**
(43) Date of publication of application: **21.05.2025**
(21) Application number: 23890528.5
(22) Date of filing: 28.10.2023
(51) Int. Cl.: G02B 13/00

(54) **OPTICAL SYSTEM, CAMERA, AND DEVICE**

(30) Priority: 18.11.2022 CN 202211448543
(71) Applicant: Huawei Technologies Co., Ltd., Shenzhen, Guangdong 518129 (CN)
(72) Inventor: WU, Zhikun, Shenzhen, Guangdong 518129 (CN); NIU, Yajun, Shenzhen, Guangdong 518129 (CN); LI, Dengfeng, Shenzhen, Guangdong 518129 (CN); GE, Hong, Shenzhen, Guangdong 518129 (CN); LI, Yuyin, Shenzhen, Guangdong 518129 (CN); ZUO, Qi, Shenzhen, Guangdong 518129 (CN); WANG, Heng, Shenzhen, Guangdong 518129 (CN); TANG, Wei, Shenzhen, Guangdong 518129 (CN)
(74) Representative: Thun, Clemens
(86) International application number: PCT/CN2023/127419
(87) International publication number: WO 2024/104092

(57) **Abstract**

This application provides an optical system, a camera, and an optical device. The optical system includes a lens group and a light folding element. The light folding element includes a first surface, a second surface, a third surface, and a fourth surface, where the first surface and the fourth surface are disposed opposite to each other, the second surface is connected between the first surface and the fourth surface, the third surface is connected between the first surface and the fourth surface, light entering the optical system includes effective light and ineffective light, and effective light passing through the lens group is capable of being transmitted into the light folding element through the first surface, is reflected by the second surface, the first surface, and the third surface in sequence, and then leaves from the first surface to the outside of the light folding element. The light folding element further includes a first light shielding structure, and the first light shielding structure is disposed on a side that is of the fourth surface and that faces the first surface, and is configured to prevent at least a part of ineffective light in the light folding element from being transmitted to the outside of the light folding element through the first surface.

## Description

This application claims priority to Chinese Patent Application No. 202211448543.0, filed with the China National Intellectual Property Administration on November 18, 2022 and entitled "OPTICAL SYSTEM, CAMERA, AND DEVICE", which is incorporated herein by reference in its entirety.

### TECHNICAL FIELD

This application relates to the field of optical technologies, and in particular, to an optical system, a camera, and a device.

### BACKGROUND

Image shooting technologies have become important technical means in life and production, for example, photographing and shooting technologies. As technologies develop, a user imposes an increasingly high requirement on image shooting by using a device, and imposes an increasingly high requirement on image shooting quality. However, during image shooting, ineffective light entering an image sensor through an optical system affects imaging quality of the device. The ineffective light is usually light enters the image sensor without using an optical path designed in the optical system, for example, stray light from an environment.

### SUMMARY

Embodiments of this application provide an optical system that can reduce ineffective light to improve imaging quality, a camera, and a device.

According to a first aspect, an embodiment of this application provides an optical system, including:
a lens group; and
a light folding element, including a first surface, a second surface, a third surface, and a fourth surface, where the first surface and the fourth surface are disposed opposite to each other, the second surface is connected between the first surface and the fourth surface, the third surface is connected between the first surface and the fourth surface, light entering the optical system includes effective light and ineffective light, and effective light passing through the lens group is capable of being transmitted into the light folding element through the first surface, is reflected by the second surface, the first surface, and the third surface in sequence, and then leaves from the first surface to the outside of the light folding element; and
the light folding element further includes a first light shielding structure, and the first light shielding structure is disposed on a side that is of the fourth surface and that faces the first surface, and is configured to prevent at least a part of ineffective light in the light folding element from being transmitted to the outside of the light folding element through the first surface.

When the ineffective light is incident to the first light shielding structure on the fourth surface, the ineffective light can be shielded and cannot leave the light folding element from the first surface. This reduces ineffective light incident to an image sensor of a camera, and helps improve imaging quality of the camera.

According to the first aspect, in a possible implementation of this application, the fourth surface is provided with an opening groove extending toward the first surface, and the first light shielding structure is located in the opening groove.

The first light shielding structure is disposed in a manner of disposing the opening groove, so that a structure of the light folding element is simplified. The first light shielding structure is a light shielding coating coated on a side wall of the opening groove, for example, ink. In another implementation, the first light shielding structure may alternatively be a light shielding film attached to a side wall of the opening groove, or the first light shielding structure may be a light shielding object filled in the opening groove. According to the first aspect, in a possible implementation of this application, the optical system further includes a second light shielding structure, the second light shielding structure is disposed on the side that is of the fourth surface and that faces the first surface, and the second light shielding structure and the first light shielding structure are spaced from each other.

The second light shielding structure and the first light shielding structure are spaced from each other on the fourth surface, to improve light efficiency of shielding ineffective light, and further reduce the ineffective light in the optical system.

According to the first aspect, in a possible implementation of this application, the first surface and the fourth surface are disposed opposite to each other in a first direction, the second surface and the third surface are spaced from each other in a second direction different from the first direction, and the optical system further includes a third light shielding structure. In the second direction, the first light shielding structure is located between the second light shielding structure and the third light shielding structure. In the first direction, a height of the first light shielding structure is greater than a height of the second light shielding structure, the height of the first light shielding structure is greater than a height of the third light shielding structure, and the first light shielding structure, the second light shielding structure, and the third light shielding structure are located outside an effective field of view of the effective light, so that each light shielding structure does not affect transmission of the effective light in the light folding element.

According to the first aspect, in a possible implementation of this application, the light folding element further includes a fifth surface, the fifth surface is connected between the first surface and the fourth surface, the fifth surface is connected between the second surface and the third surface, and the fifth surface is a reflection reduction surface and is configured to reduce reflection of light incident to the fifth surface. The fifth surface may eliminate or eliminate at least a part of ineffective light.

According to the first aspect, in a possible implementation of this application, the fifth surface is disposed obliquely relative to the fourth surface. Compared with that in a case in which the fifth surface is perpendicular to the fourth surface, in a case in which the fifth surface is disposed obliquely relative to the fourth surface, an incident angle of ineffective light incident to the fifth surface can be modified, so that a quantity of times that an optical path of the ineffective light is folded in the light folding element increases, and reflection of the ineffective light is finally reduced by another surface and the ineffective light is finally absorbed by another surface, for example, a reflection reduction region of the sixth surface or the second surface or a reflection reduction region of the third surface.

According to the first aspect, in a possible implementation of this application, the light folding element includes a first prism and a second prism that are joined together, and the first light shielding structure is located between the first prism and the second prism. The light folding element is formed by splicing the prism. This avoids opening groove processing.

According to the first aspect, in a possible implementation of this application, the first surface includes an incident region and an emergent region, light is capable of penetrating into the light folding element through the incident region, light is capable of leaving the emergent region through the emergent region, the incident region is disposed at an end that is of the first surface and that is close to the second surface, and the emergent region is disposed at an end that is of the first surface and that is close to the third surface. Functional partitioning is performed on the first surface, to improve flexibility of a component layout of the optical system. An anti-reflective layer (for example, an anti-reflective coating or an anti-reflective film) may be disposed on the incident region and the emergent region, to enhance transmission capabilities of the incident region and the emergent region. A total reflection layer may be disposed in another region except the incident region and the emergent region on the first surface. The total reflection layer may be a total reflection coating formed through coating, or a total reflection film layer formed through a coating process.

According to the first aspect, in a possible implementation of this application, the optical system further includes a light shielding body, the light shielding body covers the first surface, the light shielding body is located between the incident region and the emergent region, and the light shielding body is exposed between the incident region and the emergent region. The light shielding body is configured to reduce ineffective light (for example, stray light in an environment) entering the light folding element, and reduce ineffective light entering the image sensor from the light folding element, to further improve imaging quality of the camera.

According to the first aspect, in a possible implementation of this application, the light shielding body includes a first light transmission region, a second light transmission region, and a light shielding region, the light shielding region is disposed around the first light transmission region and the second light transmission region, a location of the first light transmission region corresponds to a location of the incident region, a location of the second light transmission region corresponds to a location of the emergent region, light is capable of being incident to the incident region through the first light transmission region, and light leaving the emergent region is capable of being emitted through the second light transmission region. The light shielding region is disposed around the first light transmission region and the second light transmission region, to reduce ineffective light (for example, stray light in an environment) entering the light folding element from edges of the incident region and the emergent region, and reduce ineffective light entering the image sensor from the light folding element. This further facilitates imaging quality of the camera.

According to the first aspect, in a possible implementation of this application, both the second surface and the third surface include a reflection region and a reflection reduction region disposed around the reflection region, the reflection region is configured to reflect light, and the reflection reduction region is configured to reduce reflection of light incident to the reflection reduction region.

According to the first aspect, in a possible implementation of this application, a chamfered reflection reduction surface is disposed between the first surface and the second surface and/or between the first surface and the third surface, and the chamfered reflection reduction surface is configured to reduce reflection of light incident to the chamfered reflection reduction surface.

According to the first aspect, in a possible implementation of this application, the fourth surface is a reflection reduction surface, and is configured to reduce a quantity of reflection times of ineffective light incident to the fourth surface, to help reduce ineffective light of the optical system.

According to a second aspect, an embodiment of this application provides a camera, including the optical system according to the first aspect and an image sensor. A lens group of the optical system is disposed facing a first surface of the optical system, the image sensor is disposed facing the first surface of the optical system, and effective light passing through the lens group is capable of being transmitted into the light folding element through the first surface, is reflected by the second surface of the light folding element, the first surface, and the third surface of the light folding element in sequence, and then leaves the light folding element from the first surface and reaches the image sensor.

According to a third aspect, an embodiment of this application provides a device, including the camera according to the second aspect and a housing, where the camera is mounted on the housing.

According to a fourth aspect, an embodiment of this application provides an optical system, including:
a lens group; and
a light folding element, including a first surface, a second surface, a third surface, a fourth surface, and a fifth surface, where the first surface and the fourth surface are disposed opposite to each other, the second surface is connected between the first surface and the fourth surface, the third surface is connected between the first surface and the fourth surface, the fifth surface is connected between the first surface and the fourth surface, the fifth surface is disposed obliquely relative to the fourth surface, the fifth surface is a reflection reduction surface, and
effective light passing through the lens group is capable of being transmitted into the light folding element through the first surface, is reflected by the second surface, the first surface, and the third surface in sequence, and leaves from the first surface to the outside of the light folding element.

According to the fourth aspect, in a possible implementation of this application, the light folding element further includes a sixth surface, the sixth surface and the fifth surface are disposed opposite to each other, the sixth surface is connected between the first surface and the fourth surface, and the sixth surface is a reflection reduction surface.

According to the fourth aspect, in a possible implementation of this application, the sixth surface is disposed obliquely relative to the fourth surface.

According to the fourth aspect, in a possible implementation of this application, there is a third included angle between the fifth surface and the fourth surface, and the third included angle is an acute angle.

According to the fourth aspect, in a possible implementation of this application, there is a fourth included angle between the sixth surface and the fourth surface, and the fourth included angle is an acute angle.

### BRIEF DESCRIPTION OF DRAWINGS

FIG. 1 is a plane diagram of a device according to some implementations of this application;
FIG. 2 is a block diagram of a structure of the device shown in FIG. 1;
FIG. 3 is a diagram of a structure of an optical system according to some implementations of this application;
FIG. 4 is a diagram of a partial region of the device shown in FIG. 1;
FIG. 5 is a diagram of a region of a first surface of a light folding element according to some implementations of this application;
FIG. 6a is a diagram of a partial structure of a camera according to some implementations of this application;
FIG. 6b is a diagram of a partial structure of an optical system according to some other implementations of this application;
FIG. 7 is a diagram of a region of a second surface of a light folding element according to some implementations of this application;
FIG. 8 is a flowchart of a method for capturing an image by a camera according to some implementations of this application;
FIG. 9a is a diagram of an optical path of ineffective light with a large incident angle in a trapezoidal prism in which no light shielding structure is disposed;
FIG. 9b is a diagram of an optical path of ineffective light with a large incident angle incident to an optical system in some implementations of this application;
FIG. 10 is a diagram of a light folding element formed by a single prism according to some implementations of this application;
FIG. 11 is a diagram of a light folding element formed by two prisms according to some implementations of this application;
FIG. 12a is a diagram of an optical path, in a first possible case, of ineffective light with a large incident angle in a light folding element in which only a first light shielding structure is disposed according to some implementations of this application;
FIG. 12b is a diagram of an optical path, in a second possible case, of ineffective light with a large incident angle in a light folding element in which only a first light shielding structure is disposed according to some implementations of this application;
FIG. 12c is a diagram of an optical path, in a first possible case, of ineffective light with a large incident angle in a light folding element in which a plurality of light shielding structures are disposed according to some implementations of this application;
FIG. 12d is a diagram of an optical path, in a second possible case, of ineffective light with a large incident angle in a light folding element in which a plurality of light shielding structures are disposed according to some implementations of this application;
FIG. 13 is a diagram of a light folding element formed by several prisms according to some implementations of this application;
FIG. 14 is a three-dimensional assembly diagram of a partial structure of an optical system according to some implementations of this application;
FIG. 15 is a three-dimensional exploded diagram of a partial structure of an optical system according to some implementations of this application;
FIG. 16 is a three-dimensional perspective diagram of a partial structure of an optical system according to some implementations of this application;
FIG. 17 is a three-dimensional perspective diagram of a partial structure of an optical system according to some implementations of this application;
FIG. 18 is a perspective diagram of a light folding element without a light shielding structure according to some implementations of this application;
FIG. 19 is a side view of a light folding element according to some implementations of this application;
FIG. 20a is a diagram of a viewing angle of an optical path of first ineffective light in an elongated trapezoidal prism;
FIG. 20b is a diagram of another viewing angle of an optical path of first ineffective light in an elongated trapezoidal prism;
FIG. 20c is a diagram of a viewing angle of an optical path of first ineffective light in a light folding element;
FIG. 20d is a diagram of another viewing angle of an optical path of first ineffective light in a light folding element;
FIG. 21a is a diagram in which light is incident to a fifth surface of an elongated trapezoidal prism;
FIG. 21b is a diagram in which light is incident to a fifth surface of a light folding element;
FIG. 22a is a diagram of a viewing angle of an optical path of second ineffective light in an elongated trapezoidal prism;
FIG. 22b is a diagram of another viewing angle of an optical path of second ineffective light in an elongated trapezoidal prism;
FIG. 22c is a diagram of a viewing angle of an optical path of second ineffective light in a light folding element;
FIG. 22d is a diagram of another viewing angle of an optical path of second ineffective light in a light folding element;
FIG. 23a is a diagram of a viewing angle of an optical path of third ineffective light in an elongated trapezoidal prism;
FIG. 23b is a diagram of another viewing angle of an optical path of third ineffective light in an elongated trapezoidal prism;
FIG. 23c is a diagram of a viewing angle of an optical path of third ineffective light in a light folding element; and
FIG. 23d is a diagram of another viewing angle of an optical path of third ineffective light in a light folding element.

### DESCRIPTION OF EMBODIMENTS

Various implementation solutions described in this application relate to an optical system used in a camera (specifically, a small shape telephoto camera). In some implementation solutions, this telephoto camera may be integrated in a small device (for example, a smartphone, a tablet computer, a tablet computer, or a wearable device). The telephoto camera usually has a long focal length (for example, 60 mm or longer), which can magnify a distant object and provide a high-quality image of the distant object. In some implementations, the optical system may include a lens group and a light folding element.

In some implementations, the light folding element may reflect (or fold) light to guide the light to a lens and/or an image sensor. In some implementation solutions, the light folding element may be of an elongated shape, the elongated shape has a length extending in a direction orthogonal to an optical axis of the lens group, and the length is greater than a height extending in a direction parallel to the optical axis. In some implementations, the light folding element may include an elongated prism (for example, a trapezoidal prism) having a plurality of (for example, at least four) surfaces. In some implementation solutions, the elongated prism may transfer light captured by the lens, so that the light passes through a first surface of the prism. At least a part of the light may reach a second surface of the prism and then be reflected at the second surface of the prism. At least a part of the light reflected by the second surface of the prism may be reflected back to the first surface of the prism. When an incident angle of the light is close to or greater than a critical angle of the prism, total internal reflection (TIR) may occur. Therefore, the light may be reflected at the first surface of the prism. At least a part of the light reflected by the first surface may be reflected to a third surface of the prism and reflected at the third surface of the prism. Next, at least a part of the light reflected by the third surface of the prism may reach the first surface of the prism and leave the prism at the first surface of the prism, to focus on an image plane on the image sensor. A first light shielding structure is disposed on a side that is of a fourth surface of the prism and that faces the first surface. The first light shielding structure can prevent ineffective light in the prism from being transmitted from the first surface, to reduce ineffective light entering the image sensor, so as to improve imaging quality. In addition, the lens group and the image sensor are located on a same side of the light folding element, and this prism can reduce at least a Z height (for example, a height along the optical axis or a Z axis of the lens group), and therefore reduce an entire size of the optical system.

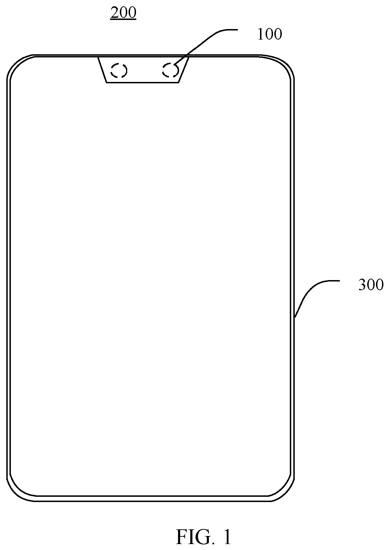

As shown in FIG. 1, an implementation of this application provides a device 200, including a housing 300 and a camera 100 mounted on the housing 300. The camera 100 is configured to capture an image.

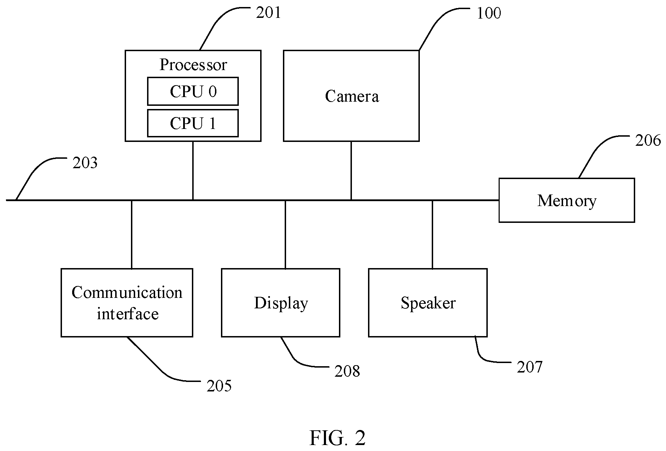

As shown in FIG. 2, the device 200 further includes a processor 201, a communication bus 203, at least one communication interface 205, and a memory 206. The processor 201 is communicatively connected to the camera 100, the at least one communication interface 205, and the memory 206 through the communication bus 203. The device 200 may be any one of a plurality of different types of consumer devices that can be easily held by a user in a normal use process. Specifically, the device 200 may be a device equipped with the camera 100, for example, a smartphone, a smartwatch, a tablet computer, a personal digital assistant (personal digital assistant, PDA), or a notebook computer.

The processor 201 may be a central processing unit (central processing unit, CPU), or may be another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or transistor logic device, a discrete hardware component, or the like. The general-purpose processor may be a microprocessor, or the processor may be any conventional processor or the like. The processor 201 is a control center of the device 200, and connects various parts of the entire device 200 through various interfaces and lines. The communication bus 203 may include a path for transferring information between the foregoing components.

The communication interface 205 is any apparatus like a transceiver, and is configured to communicate with another device or communication network, for example, the Ethernet, a radio access network (radio access network, RAN), or a wireless local area network (wireless local area network, WLAN).

The memory 206 may be configured to store a computer program and/or module, and the processor 201 implements various functions of the device 200 by running or executing the computer program and/or module stored in the memory 206 and invoking data stored in the memory 206. The memory 206 may mainly include a program storage region and a data storage region. The program storage region may store an operating system, an application that is required by a plurality of functions (such as a sound playing function and an image playing function), and the like. The data storage region may store data (such as audio data or a phone book) that is created based on use of the device 200, and the like. In addition, the memory 206 may include a highspeed random access memory, and may further include a non-volatile memory like a hard disk, an internal memory, a plug-connected hard disk, a smart media card (smart media card, SMC), a secure digital (secure digital, SD) card, a flash card (flash card), a plurality of disk storage devices, a flash storage device, or another volatile solid-state storage device. The memory 206 may exist independently, and is connected to the processor 201 through the communication bus 203. Alternatively, the memory 206 may be integrated with the processor 201.

During specific implementation, in an implementation, the device 200 may include a plurality of processors 201, for example, a CPU 0 and a CPU 1 in FIG. 2. Each of the processors 201 may be a single-core processor (single-CPU) or a multi-core processor (multi-CPU). The processor herein may be one or more devices, circuits, and/or processing cores configured to process data (for example, computer program instructions).

In this implementation, the device 200 further includes a speaker 207 and a display 208 that are electrically connected to the processor 201. It can be understood that FIG. 2 is merely an example of the device 200, and does not constitute a limitation on the device 200. The device 200 may include more or fewer components than those shown in FIG. 2, or may combine some components, or have different components. For example, the device 200 may further include an input/output device, a network access device, and the like. This is not limited herein.

In an application scenario, the device 200 is a consumer device like a smartphone. When detecting a trigger event of a virtual key corresponding to a camera application, the processor 201 controls to start the camera 100 and correspondingly the camera 100 enters an image shooting interface, to help a user capture an image. It may be understood that the camera 100 may be a front-facing camera of the device 200, or may be a rear-facing camera of the device 200.

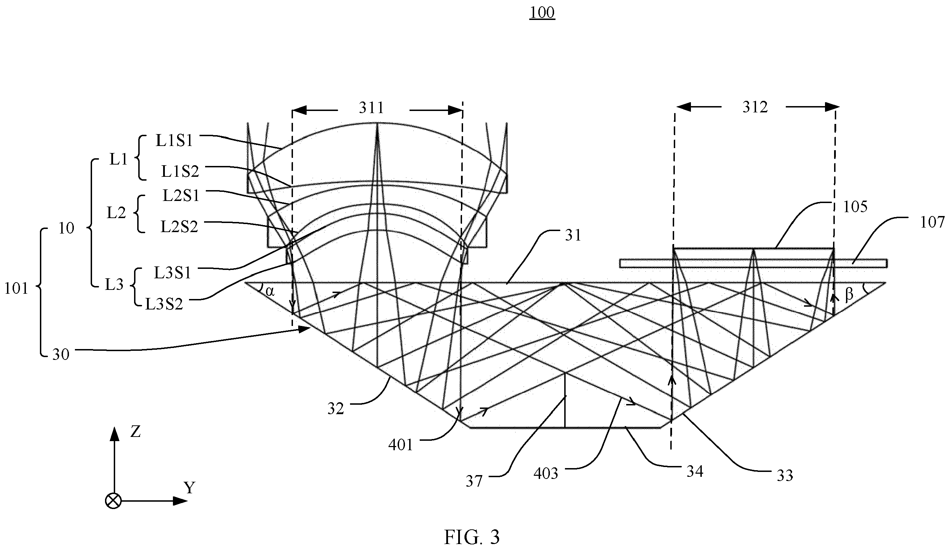

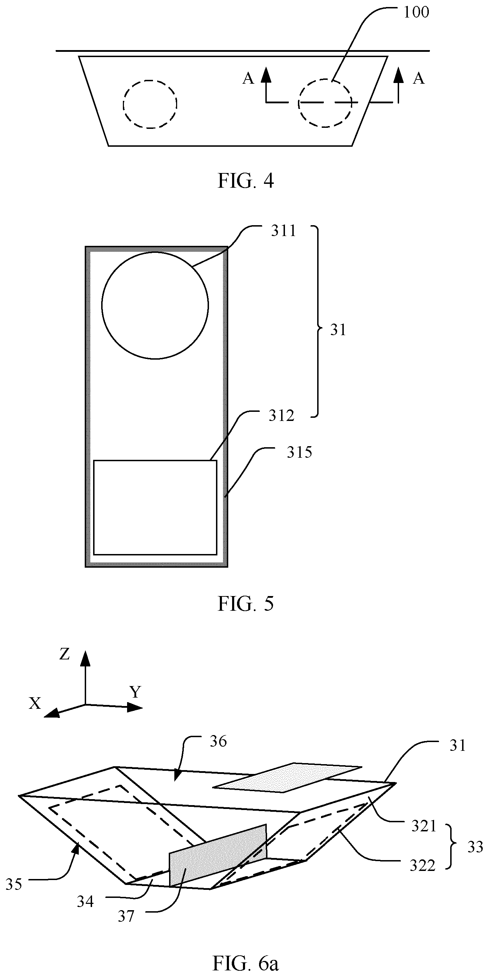

FIG. 3 and FIG. 4 show examples of the camera in some implementations. In this example, FIG. 3 is a sectional view of the camera 100 (for example, a telephoto camera) observed from a viewing angle indicated by a dashed line A-A in FIG. 4. As shown in FIG. 3, the camera 100 may include an optical system 101 and an image sensor 105. Light entering the optical system 101 includes effective light and ineffective light. The effective light is light that can finally enter the image sensor 105 through an optical path designed in the optical system 101, and is usually light of a scene or a photographed object captured by the optical system 101. The ineffective light is light obtained after the effective light is removed from the light entering the optical system 101, for example, stray light from an environment.

As shown in FIG. 3, the optical system 101 includes a lens group 10 and a light folding element 30. The light folding element 30 may be optically disposed between the lens group 10 and the image sensor 105 along an optical transmission path from light, from the lens group 10, to the image sensor 105, and is configured to fold an optical path.

In some implementation solutions, the lens group 10 may include a plurality of lenses. In some implementation solutions, the lens group 10 may include at least three lenses, for example, a lens L1, a lens L2, and a lens L3, as shown in FIG. 3. The plurality of lenses (for example, the lens L1, the lens L2, and the lens L3) may individually include at least a front surface facing the environment and a rear surface opposite to the front surface, for example, L1S1 and L1S2 of the lens L1, L2S1 and L2S2 of the lens L2, and L3S1 and L3S2 of the lens L3 indicated in FIG. 1. In some implementation solutions, the optical system 101 may include an aperture stop, and the aperture stop may limit and control an amount of light entering the lens group 10 or captured by the lens group 10. In some implementation solutions, the optical system 101 may optionally include a filter 107, for example, an infrared filter (IF). As shown in FIG. 3, the IF may shield or prevent at least a part of infrared light from reaching the image sensor 105.

In some implementations, the surface L1S1 of the lens L1 of the lens group 10 may be approximately parallel to an image plane of the image sensor 105, so that light incident to the front surface of the lens L1 may be parallel to light incident to the image plane of the image sensor 105.

In some implementations, the plurality of lenses (for example, the lens L1, the lens L2, and the lens L3) of the lens group 10 may be made of various transparent materials. For example, the lens group 10 may include a combination of a glass lens and a plastic lens. In another example, all the lenses in the lens group 10 may be glass lenses or plastic lenses. Similarly, the light folding element 30 may further include various transparent materials, for example, one or more glass prisms, one or more plastic prisms, or a combination of a glass prism and a plastic prism. Compared with glass, plastic can have a lighter weight and lower material costs. In some implementations, using a glass lens as a first lens of the lens group 10 (for example, the lens L1 of the lens group 10) can reduce a thermal focusing offset in an optical system (for example, the optical system 101). In some implementations, the lens group 10 may include one or more rotationally symmetric lenses. The rotationally symmetric lens may be a lens that has an optical symmetry characteristic relative to an optical axis of the lens. In other words, rotation of the lens around a Z axis does not affect an optical characteristic of the lens. In some implementation solutions, all the lenses in the lens group 10 may be aspheric lenses. In some implementation solutions, all the lenses in the lens group 10 may be spherical lenses. In some implementation solutions, the lens group 10 may include a combination of an aspheric lens and a spherical lens. The spherical lens may be a lens that has a same curve similar to a spherical shape across at least one surface, and the aspherical lens may be a lens that has a surface whose curvature gradually changes from a center of the lens to an edge. In some implementation solutions, the aspheric lens may help the optical system 101 implement a small F-number. For a specified focal length, a smaller F-number means that the optical system 101 may use a larger aperture stop, and therefore a camera including the optical system 101 may have a fast shutter speed.

In some implementations, the light folding element 30 may include at least four surfaces. For example, the light folding element 30 may include a first surface 31, a second surface 32, a third surface 33, and a fourth surface 34. The first surface 31 and the fourth surface 34 are disposed opposite to each other. The second surface 32 is connected between the first surface 31 and the fourth surface 34, and the third surface 33 is connected between the first surface 31 and the fourth surface 34. In this implementation, the first surface 31 and the fourth surface 34 are disposed opposite to each other in a first direction (for example, the Z axis shown in FIG. 3), and the first direction is parallel to an optical axis of the lens group 10. The second surface 32 and the third surface 33 are spaced from each other in a second direction (the second direction (for example, a Y axis shown in FIG. 3)). The first direction is perpendicular to the second direction. It may be understood that, in another implementation, the first direction is different from the second direction. The first surface 31 is used as an incident surface and an emergent surface of light, and also has a function of reflecting light. The second surface 32 and the third surface 33 are configured to reflect light. The fourth surface 34 is configured to reduce or eliminate reflected light on the fourth surface 34, to reduce or eliminate the ineffective light of the optical system 101. In this implementation, an optical path of the effective light is that the effective light is emitted from the lens group 10, then transmitted into the light folding element 30 through the first surface 31, reflected by the second surface 32, reflected by the first surface 31, reflected by the third surface 33, and transmitted out of the light folding element 30 through the first surface 31 in sequence, and reaches the image sensor 105.

Refer to FIG. 3 again. The light folding element 30 may fold light in the light folding element 30 a plurality of times, to guide light from the lens group 10 to pass through the light folding element 30 and reach the image sensor 105. For example, the effective light passing through the lens group 10 can be transmitted to the light folding element 30 through the first surface 31, the light is reflected by the second surface 32, the first surface 31, and the third surface 33 in sequence, that is, the light is folded three times, and then the light leaves the first surface 31 and reaches the image sensor 105.

As shown in FIG. 3, the light folding element 30 is a trapezoidal prism. In some implementations, the light folding element 30 may have another shape, for example, a pentagon or a hexagon, and still provides the foregoing light folding function and design benefits. For a specified shape, angles between the surfaces of the light folding element 30 may also be designed for desired performance. For example, in some implementation solutions, when the light folding element 30 is a trapezoidal prism, as shown in FIG. 3, the first surface 31 and the fourth surface 34 are disposed in parallel, a first included angle α is formed between the second surface 32 and the first surface 31, and the first included angle α meets: 15°<α<45°; a second included angle β is formed between the third surface 33 and the first surface 31, and the second included angle β meets: 15°<β<45°; and the second surface 32 and the third surface 33 are symmetrically disposed with respect to a normal plane of the first surface 31. It may be understood that a range of the first included angle α is not limited in this application, a range of the second included angle β is not limited in this application, and the second surface 32 and the third surface 33 are not limited to being symmetrically disposed with respect to the normal plane of the first surface 31 in this application. The first surface 31, the second surface 32, and the third surface 33 may be referred to as working surfaces, and are configured to transmit effective light. Another surface of the light folding element 30, for example, the fourth surface, may be referred to as a non-working surface. Reflection reduction processing may be performed on the non-working surface of the light folding element 30. The reflection reduction processing includes at least one of grinding, film coating, silkscreen, and the like.

The surfaces of the light folding element 30 shown in the accompanying drawings of this application are planes. However, the surfaces of the light folding element 30 are not limited to the planes in this application, and the surfaces may alternatively include a curved surface, a plane, and the like. For example, the fourth surface 34 that is the non-working surface includes a plurality of sub-surfaces, and two adjacent sub-surfaces form a depression.

In some implementations, the second surface 32 or the third surface 33 may individually include a reflective coating (or a reflector). For example, the reflective coating may include a mirror coating on a thin metal layer, a film having a white inner surface, and the like. Therefore, the second surface 32 and the third surface 33 may reflect light at respective surfaces. The first surface 31, the second surface 32, and the third surface 33 may reflect light during total internal reflection (TIR). The TIR may occur when an incident angle of light is close to or greater than a specific limiting angle (referred to as a critical angle). The incident angle is an angle between light incident to a surface and a line (referred to as a normal line) perpendicular to the surface at an incident point. Therefore, when the incident angle of the light is less than the critical angle, the first surface 31 may enable the light to pass through. On the contrary, when the incident angle of the light is close to or greater than the critical angle, the first surface 31 may reflect the light at a corresponding surface. In some implementations, the first surface 31 may further individually include an anti-reflection coating. Reflection reduction processing is performed on the fourth surface 34, so that a reflection reduction surface is formed on the fourth surface 34, to reduce reflectivity of the fourth surface 34. For example, the reflection reduction processing includes at least one of grinding, film coating, silkscreen, and the like. For example, a diffuse reflection surface may be formed on the fourth surface 34 by grinding the fourth surface 34. Further, a light shielding or light-absorbing film layer may be disposed on the fourth surface 34 to absorb ineffective light. It may be understood that the fourth surface 34 may not include a reflection reduction surface.

In some implementations, as shown in FIG. 5, the first surface 31 includes an incident region 311 and an emergent region 312. Effective light can penetrate into the light folding element 30 through the incident region 311, and can leave the emergent region 312 through the emergent region 312. An anti-reflective layer (for example, an anti-reflective coating or an anti-reflective film) may be disposed on the incident region 311 and the emergent region 312, to enhance transmission capabilities of the incident region 311 and the emergent region 312. A total reflection layer may be disposed in a region of the first surface 31 except the incident region 311 and the emergent region 312. The total reflection layer may be a total reflection coating formed through coating, or a total reflection film layer formed through a coating process. In the light folding element 30, light incident to the incident region 311 can also be reflected in the incident region 311, and light incident to the emergent region 312 can also be reflected in the emergent region 312. In other words, the incident region 311 and the emergent region 312 may be used to transmit and reflect light. It may be understood that shapes of the incident region 311 and the emergent region 312 in FIG. 5 are examples, and the shapes of the incident region 311 and the emergent region 312 are not limited in this application. In some implementations, a light shielding layer 315 may be disposed on the first surface 31 along an edge contour of the first surface 31, to reduce ineffective light (for example, ambient stray light) entering the light folding element 30 from an edge of the first surface 31.

In some implementations, as shown in FIG. 6a, both the second surface 32 and the third surface 33 include a reflection region 321 and a reflection reduction region 322 disposed around the reflection region 321. The reflection region 321 is configured to reflect light. The reflection reduction region 322 is configured to reduce reflection of light that is incident to the reflection reduction region 322, to further reduce ineffective light of the optical system 101. A total reflection layer may be disposed in the reflection region 321. The total reflection layer may be a total reflection coating formed through coating, or a total reflection film layer formed through a coating process. Alight shielding material like ink may be disposed on the reflection reduction region 322. A length of the first surface 31 in a third direction (an X axis shown in FIG. 6a) is the same as a length of the fourth surface 34 in a second direction, and both the second surface 32 and the third surface 33 are of rectangular structures. The third direction is approximately perpendicular to the first direction, and the third direction may be approximately perpendicular to the second direction. In another implementation of this application, the third direction is different from the first direction, and the third direction is different from the second direction.

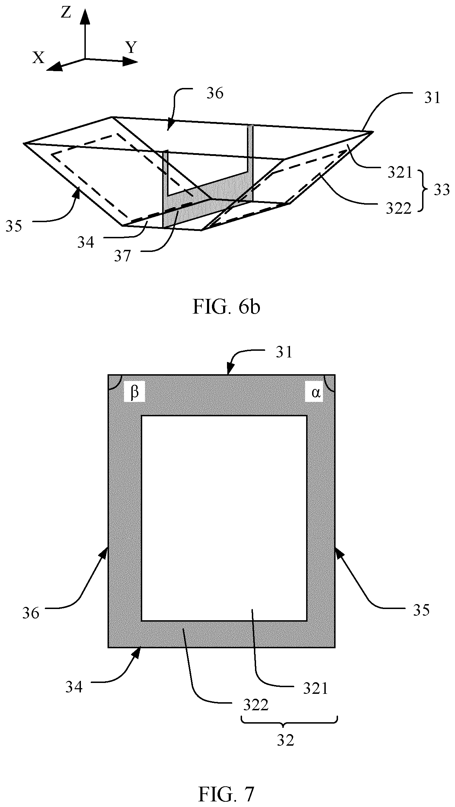

In some implementations, refer to FIG. 6a and FIG. 7 again. The light folding element 30 further includes a fifth surface 35 and a sixth surface 36 that are spaced from each other in the third direction. The fifth surface 35 is connected between the first surface 31 and the fourth surface 34, and the fifth surface 35 is connected between the second surface 32 and the third surface 33. The fifth surface 35 and the sixth surface 36 are disposed approximately in parallel in the third direction. The fifth surface 35 is approximately perpendicular to the first surface 31. The sixth surface 36 is connected between the first surface 31 and the fourth surface 34, the fifth surface 35 is connected between the second surface 32 and the third surface 33, and the fifth surface 35 is approximately perpendicular to the first surface 31. Both the fifth surface 35 and the sixth surface 36 are reflection reduction surfaces, and are configured to reduce reflectivity of the fifth surface 35 and the sixth surface 36. In this implementation, reflection reduction processing is performed on the fifth surface 35 and the sixth surface 36. The reflection reduction processing includes at least one of grinding, film coating, and silkscreen. For example, a light-absorbing layer is disposed on the fifth surface 35 and the sixth surface 36. When ineffective light is incident to the fifth surface 35 and the sixth surface 36, the ineffective light may be absorbed. The fifth surface 35 and the sixth surface 36 may be referred to as a side wall of the light folding element 30. It may be understood that the fifth surface 35 and the sixth surface 36 may not be disposed in parallel to each other.

In this application, the fifth surface 35 is not limited to be a plane, and the sixth surface 36 is not limited to be a plane. The fifth surface 35 and/or the sixth surface 36 may also include a curved surface, a plane, or the like. For example, the fifth surface 35 includes a plurality of sub-surfaces, and two adjacent sub-surfaces form a depression.

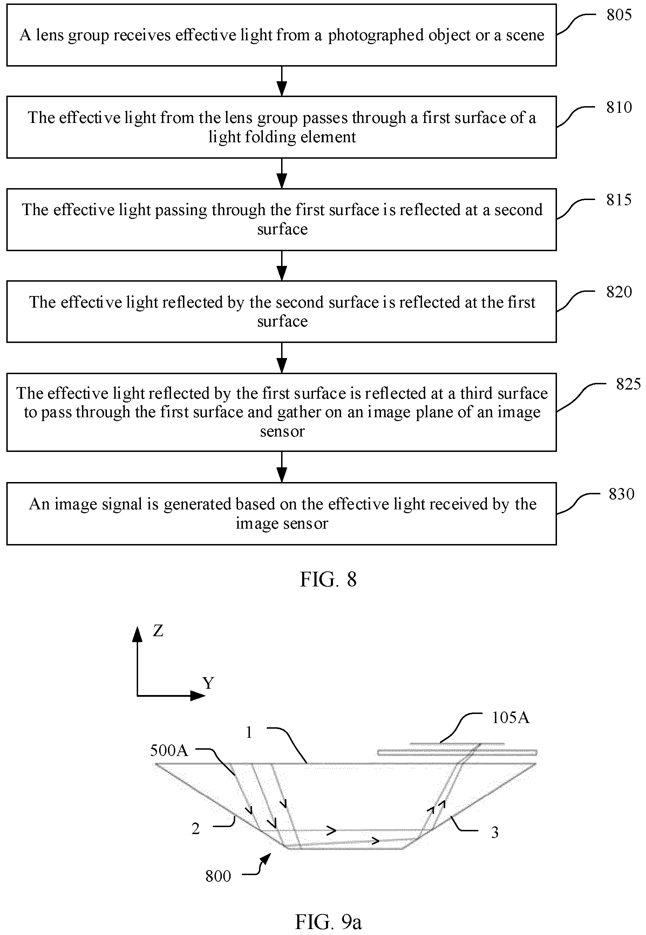

As shown in FIG. 8, in some implementations, the lens group 10 receives effective light from a photographed object or a scene. This is indicated in a block 805. The effective light from the lens group 10 passes through the first surface 31 of the light folding element 30. This is indicated in a block 810. The effective light passing through the first surface 31 may reach the second surface 32 and may be reflected at the second surface 32, that is, the effective light passing through the first surface 31 is reflected at the second surface 32. This is indicated in a block 815. The effective light reflected by the second surface 32 may be ejected back to the first surface 31. As described above, when an incident angle of the effective light is close to or greater than a critical angle of the light folding element 30, TIR may occur, and the light on the first surface 31 is further reflected to the third surface 33, that is, the effective light reflected by the second surface 32 is reflected at the first surface 31. This is indicated in a block 820. The effective light reflected by the first surface 31 is reflected at the third surface 33 to pass through the first surface 31 and gather on an image plane of the image sensor 105. This is indicated in a block 825. The image sensor 105 may detect the effective light and generate an image signal (for example, an electrical signal) accordingly. An image is generated based on the image signal. For example, an image signal is generated based on the effective light received by the image sensor 105. This is indicated in a block 830.

In this implementation, the effective light enters the light folding element 30 through the first surface 31, and is propagated along a first optical axis. The light is reflected by the second surface 32 and propagated along a second optical axis, total reflection occurs on the first surface 31, and then the light is propagated along a third optical axis. The first optical axis is approximately parallel to the first direction, the second optical axis is approximately parallel to the second direction, and the third optical axis is approximately parallel to the first direction.

For an optical system, when ineffective light enters the optical system, imaging quality is affected. For example, stray light that is brighter than light from a scene to be captured by a camera or a photographed object may cause glare. Ineffective light from an environment may enter the optical system from various directions of a camera and/or another component (for example, a side wall of a housing of a camera), and finally enter an image sensor. For example, in a trapezoidal prism 800 without a light shielding structure, as shown in FIG. 9a, field-of-view ineffective light 500A (which may be referred to as a large-field-of-view optical signal) with a large incident angle enters the trapezoidal prism 800 through a first surface 1, then is reflected by a second surface 2 and a third surface 3, and is incident to the image sensor 105A through the first surface 1.

In some implementations, as shown in FIG. 3 and FIG. 6a, the light folding element 30 further includes a first light shielding structure 37. The first light shielding structure 37 is disposed on a side that is of the fourth surface 34 and that faces the first surface 31, and is configured to shield at least a part of ineffective light, to reduce incidence of ineffective light, to the image sensor 105, that leaves the light folding element 30 from the first surface 31, so as to improve imaging quality and photographing quality of the camera 100. The first light shielding structure 37 extends from the fourth surface 34 to an edge of an effective field of view in the first direction, to shield ineffective light. The effective field of view may be an optical transmission region of effective light in the light folding element 30. The effective light that is incident from the incident region 311 of the first surface 31 to the light folding element 30 includes first edge effective light 401 and second edge effective light 403. In the second direction, the first edge effective light 401 is incident from an edge of an end that is of the incident region 311 and that is away from the emergent region 312, and the second edge effective light 403 is incident from an edge of an end that is of the incident region 311 and that is close to the emergent region 312. After being reflected by the second surface 32, the first surface 31, and the third surface 33, the first edge effective light 401 is emitted from an edge of an end that is of the emergent region 312 and that is close to the incident region 311. After being reflected by the second surface 32, the first surface 31, and the third surface 33, the second edge effective light 403 is emitted from an edge of an end that is of the emergent region 312 and that is away from the incident region 3 11. The first light shielding structure 37 is located outside the effective field of view of the effective light, so that transmission of the effective light in the light folding element 30 is not affected. For example, in this implementation, the first light shielding structure 37 is located at a middle location of the fourth surface 34 in the second direction. A height of the first light shielding structure 37 in the first direction may be a distance between the fourth surface 34 and a location at which the first edge effective light 401 intersects with the second edge effective light 403. Ineffective field of view may be a part in the light folding element from which the effective field of view is removed. For example, on a YZ surface, a range enclosed by the first edge effective light 401, the second edge effective light 403, the fourth surface 34, the second surface 32, and the third surface 33 in the light folding element 30 is the ineffective field of view. In this way, the first light shielding structure 37 can effectively shield ineffective light without affecting transmission of effective light in the light folding element 30. The first light shielding structure 37 can shield ineffective light that enters the ineffective field of view.

It may be understood that a shape and a structure of the first light shielding structure 37 are not limited in this application. For example, in a possible implementation, the first light shielding structure 37 may be approximately of a rectangular structure partly removed, as shown in FIG. 6b.

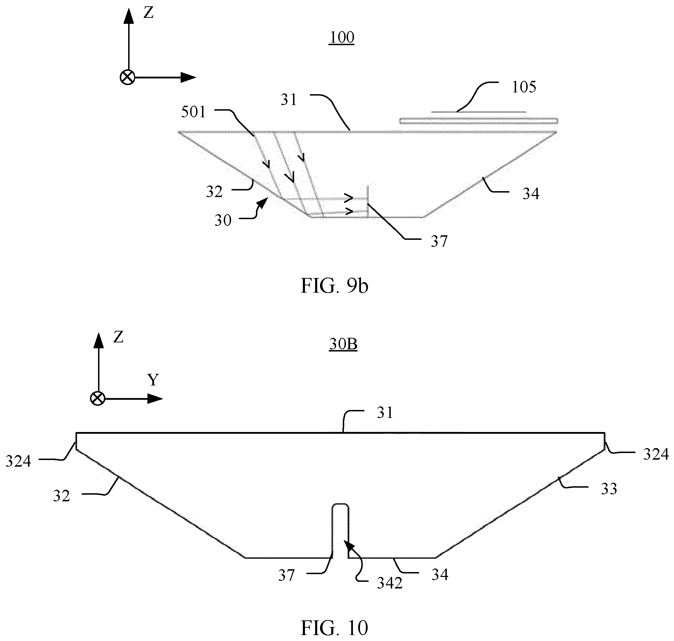

For example, as shown in FIG. 9b, large-field-of-view ineffective light 501 with a large incident angle enters the light folding element 30 from the first surface 31, is shielded, absorbed, or eliminated by the first light shielding structure 37 after being reflected by the second surface 32, and cannot leave the light folding element 30. It may be understood that a structure and a shape of the first light shielding structure 37 are not limited in this application. A location of the first light shielding structure 37 on the fourth surface 34 and a maximum height of the first light shielding structure 37 in a Z-axis direction are not limited in this application, and the first light shielding structure 37 can shield ineffective light.

In some implementations, the light folding element 30 (for example, as shown in FIG. 3) may include a single one-piece prism, and the first light shielding structure 37 may be prepared by disposing an opening groove on the fourth surface 34 and disposing a light shielding object in the opening groove. As shown in FIG. 10, an opening groove 342 extending toward the first surface 31 is disposed on the fourth surface 34 of a light folding element 30B, and the first light shielding structure 37 is located in the opening groove 342. In this implementation, the first light shielding structure 37 is a light shielding coating coated on a side wall of the opening groove 342, for example, ink. In another implementation, the first light shielding structure 37 may alternatively be a light shielding film attached to a side wall of the opening groove 342, or the first light shielding structure 37 may alternatively be a light shielding object filled in the opening groove 342. The first light shielding structure 37 is disposed in a manner of disposing the opening groove 342, so that a structure of the light folding element 30 is simplified. It may be understood that a material and a form of the first light shielding structure 37 are not limited in this application. A chamfered reflection reduction surface 324 is disposed between the first surface 31 and the second surface 32, and/or a chamfered reflection reduction surface 324 is disposed between the first surface 31 and the third surface 33. The chamfered reflection reduction surface 324 is configured to reduce reflection of light that is incident to the chamfered reflection reduction surface 324, to further reduce ineffective light of the optical system.

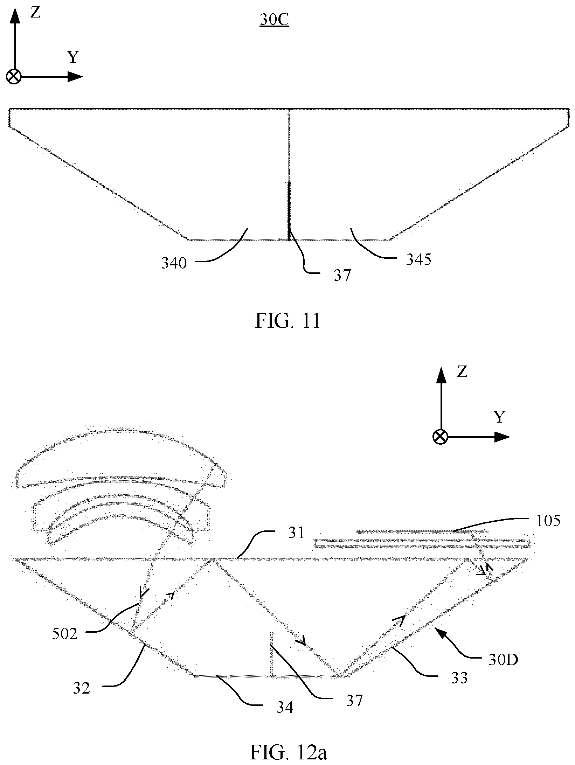

In some implementations, several prisms may be bonded together by using, for example, an optical transparent adhesive to form the light folding element. The light folding element is formed by splicing the prism. This avoids opening groove processing. According to some implementations, the first light shielding structure 37 may be formed inside the light folding element 30. As shown in FIG. 11, a light folding element 30C includes a first prism 340 and a second prism 345, an end of the first prism 340 is jointed with an end of the second prism 345, and the first light shielding structure 37 is located between the first prism 340 and the second prism 345. For example, both the first prism 340 and the second prism 345 are approximately of a right-angle trapezoidal structure, ink is coated at corresponding locations/a corresponding location of the first prism 340 and/or the second prism 345 to form the first light shielding structure 37, then, the first prism 340 and the second prism 345 are bonded together by using an optical transparent adhesive, and the first light shielding structure 37 is positioned on a bonding surface between the first prism 340 and the second prism 345, so that the first light shielding structure 37 is formed inside the light folding element 30.

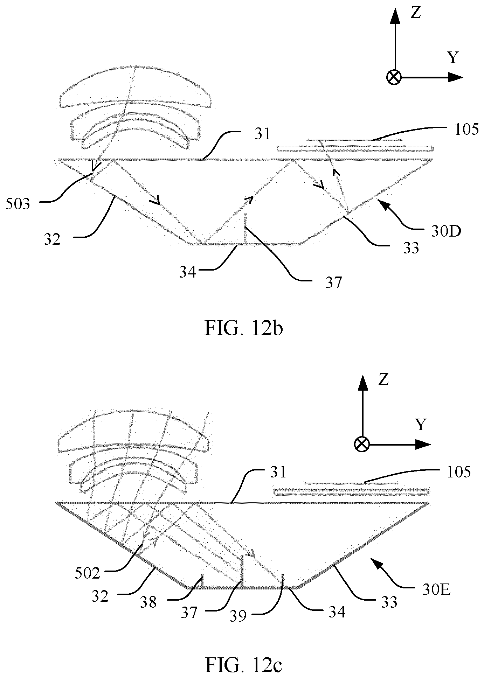

After some ineffective light with a large incident angle is reflected by the fourth surface 34, the first light shielding structure 37 may fail to shield the ineffective light, and finally enter the image sensor 105, which affects imaging. In a first possible case, as shown in FIG. 12a, ineffective light 502 passes through the first surface 31, is reflected by the second surface 32 and the first surface 31, and then is incident to a side that is of the fourth surface 34 and that is close to the third surface 33. After the ineffective light 502 is reflected by the fourth surface 34, the first light shielding structure 37 may not be able to shield the ineffective light 502, and the ineffective light 502 finally enters the image sensor 105. In a second possible case, as shown in FIG. 12b, the ineffective light 503 passes through the first surface 31, is reflected by the second surface 32 and the first surface 31, and then is incident to a side that is of the fourth surface 34 and that is close to the second surface 32. After the ineffective light 503 is reflected by the fourth surface 34, the first light shielding structure 37 may not be able to shield the ineffective light 503, and the ineffective light 503 finally enters the image sensor 105.

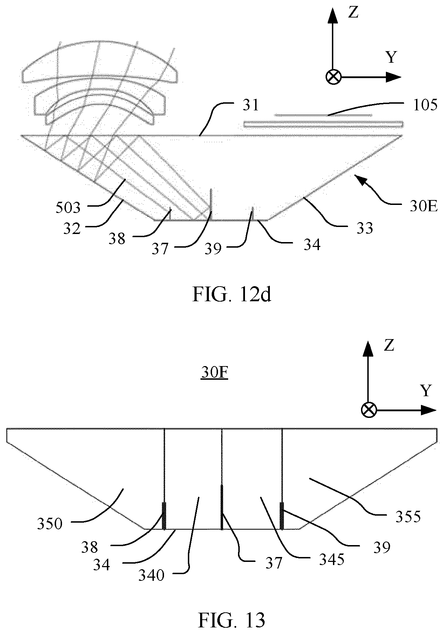

In some implementations, as shown in FIG. 12c and FIG. 12d, in a second direction (a Y axis shown in FIG. 12c and FIG. 12d), the light folding element 30E further includes a second light shielding structure 38 and a third light shielding structure 39, the second light shielding structure 38 and the third light shielding structure 39 are located on a side that is of the fourth surface 34 and that faces the first surface 31, and the first light shielding structure 37, the second light shielding structure 38, and the third light shielding structure 39 are spaced from each other. In the second direction, the first light shielding structure 37 is located between the second light shielding structure 38 and the third light shielding structure 39, the second light shielding structure 38 is located at an end that is of the fourth surface 34 and that is closer to the second surface 32, and the third light shielding structure 39 is located at an end that is of the fourth surface 34 and that is away from the second surface 32. In a first direction (a Z axis shown in FIG. 12c and FIG. 12d), a height of the first light shielding structure 37 is greater than a height of the second light shielding structure 38, and a height of the first light shielding structure 37 is greater than a height of the third light shielding structure 39. As shown in FIG. 12c, the third light shielding structure 39 can shield at least a part of ineffective light, for example, the ineffective light 502, to reduce ineffective light that is reflected by the fourth surface 34 and that can enter the image sensor 105. As shown in FIG. 12d, the second light shielding structure 38 can shield at least a part of ineffective light, for example, the ineffective light 503, to reduce ineffective light that is reflected by the fourth surface 34 and that can enter the image sensor 105. The first light shielding structure 37, the second light shielding structure 38, and the third light shielding structure 39 are located outside an effective field of view of effective light, so that each light shielding structure does not affect transmission of the effective light in the light folding element 30E. The second light shielding structure 38 and the third light shielding structure 39 may be symmetrically or asymmetrically disposed with respect to the first light shielding structure 37. A location of each light shielding structure is not limited in this application. It may be understood that a quantity of light shielding structures are not limited. For example, the optical system 101 may further include a fourth light shielding structure, a fifth light shielding structure, and the like. In other words, there may be one light shielding structure, and each light shielding structure is located outside the effective field of view of the effective light. It may be understood that the light shielding structure may also partially extend into the effective field of view. Reflection reduction processing is performed on the fourth surface 34 to form a reflection reduction surface. This reduces reflectivity of the fourth surface 34 and reduces ineffective light. The reflection reduction processing includes at least one of grinding, film coating, silkscreen, and the like.

For example, as shown in FIG. 13, a light folding element 30F may be formed by bonding the first prism 340, the second prism 345, a third prism 350, and a fourth prism 355. In this example, the first prism 340 and the second prism 345 are rectangular prisms, and the third prism 350 and the fourth prism 355 are triangular prisms, that is, the light folding element 30F is formed by using two rectangular prisms and two triangular prisms. In some implementations, the third prism 350, the first prism 340, the second prism 345, and the fourth prism 355 are sequentially arranged in a second direction (a Y axis shown in FIG. 13). The first light shielding structure 37 is located between the first prism 340 and the second prism 345, the second light shielding structure 38 is located between the first prism 340 and the third prism 350, and the third light shielding structure 39 is located between the second prism 345 and the fourth prism 355. To form the first light shielding structure 37, the second light shielding structure 38, and the third light shielding structure 39 inside the light folding element 30F, the first light shielding structure 37 may be first formed on a surface that is of the first prism 340 and that faces the second prism 345, the second light shielding structure 38 is formed on a surface that is of the first prism 340 and that faces the third prism 350, and the third light shielding structure 39 is formed on a surface that is of the second prism 345 and that faces the fourth prism 355. Next, the third prism 350 is bonded to the first prism 340, the first prism 340 is bonded to the second prism 345, and the second prism 345 is bonded to the fourth prism 355, so that the first light shielding structure 37 is positioned at a corresponding joint surface between the first prism 340 and the second prism 345, the second light shielding structure 38 is positioned at a corresponding joint surface between the first prism 340 and the third prism 350, and the third light shielding structure 39 is positioned at a corresponding joint surface between the second prism 345 and the fourth prism 355, that is, the first light shielding structure 37, the second light shielding structure 38, and the third light shielding structure 39 are located inside the light folding element 30F.

In some implementations, the optical system may include lenses and/or prisms of various materials (such as glass and plastic). In some implementations, the optical system may not use a prism, but use any suitable light folding element.

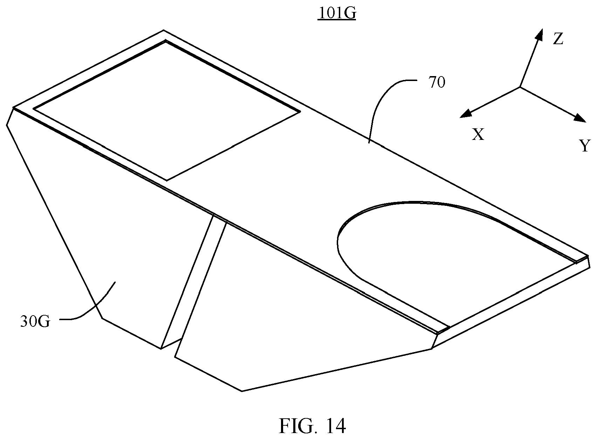

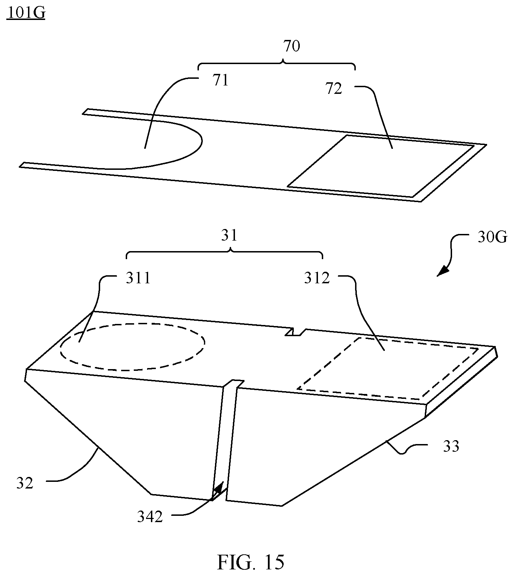

In some implementations, as shown in FIG. 14, FIG. 15, and FIG. 16, an optical system 101G further includes a light shielding body 70. The light shielding body 70 covers the first surface 31, and is configured to cover the first surface 31, to reduce ineffective light entering a light folding element. In some examples, the light shielding body 70 is an SOMA light shielding sheet, and the light shielding body 70 is fastened to the first surface 31 by using an optical adhesive. It may be understood that the light shielding body 70 is not limited to the SOMA light shielding sheet in this application, provided that the light shielding body 70 can shield light. The light shielding body 70 includes a first light transmission region 71, a second light transmission region 72, and a light shielding region 73. The light shielding region 73 is disposed around the first light transmission region 71 and the second light transmission region 72, and is configured to reduce ineffective light entering the light folding element 30. A location of the first light transmission region 71 corresponds to a location of the incident region 311, a location of the second light transmission region 72 corresponds to a location of the emergent region 312, light can be incident to the incident region 311 through the first light transmission region 71, and light leaving the emergent region 312 can be emitted through the second light transmission region 72. The first light transmission region 71 and the second light transmission region 72 may be hollow regions, or may be transparent regions. It may be understood that the light shielding body 70 may not include the first light transmission region 71 and the second light transmission region 72.

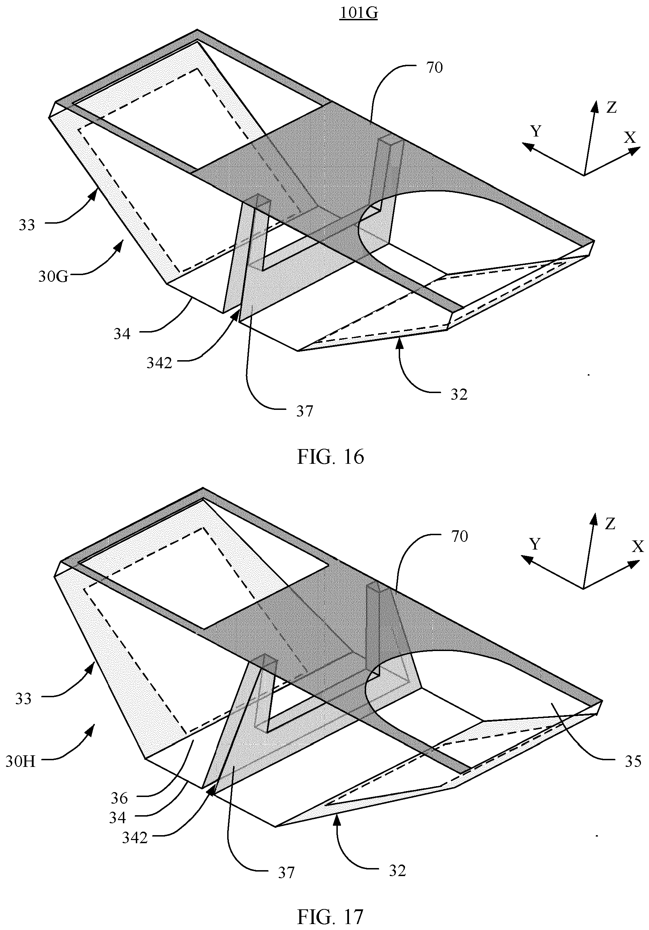

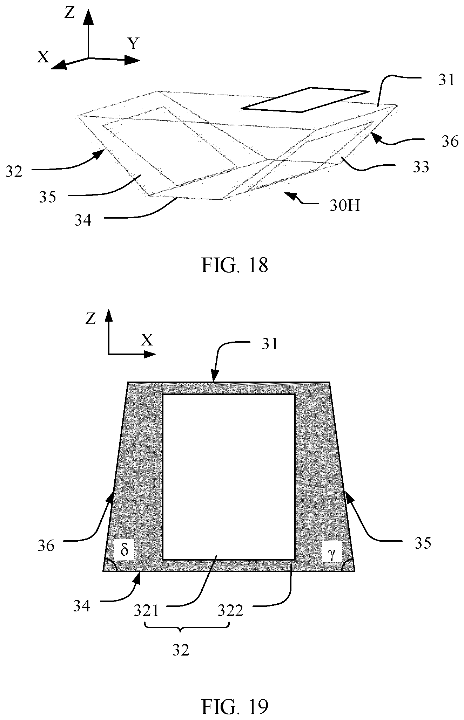

In some implementations, as shown in FIG. 17 and FIG. 18, the light shielding structure is omitted in the light folding element shown in FIG. 18, and the fifth surface 35 and the sixth surface 36 are disposed in parallel in a third direction (an X axis in FIG. 17 and FIG. 18). Refer to FIG. 19. The fifth surface 35 is disposed obliquely relative to the fourth surface 34, a third included angle γ is formed between the fifth surface 35 and the fourth surface 34, and the third included angle γ is an acute angle. The sixth surface 36 is disposed obliquely relative to the fourth surface 34, a fourth included angle δ is formed between the sixth surface 36 and the fourth surface 34, and the fourth included angle δ is an acute angle. Because both the third included angle γ and the fourth included angle δ are acute angles, a length of the fourth surface 34 in the third direction (the X axis shown in FIG. 17) is greater than a length of the first surface 31 in the third direction. In this implementation, both the second surface 32 and the third surface 33 are of isosceles trapezoidal structures. Both the fifth surface 35 and the sixth surface 36 are reflection reduction surfaces, and are configured to reduce reflectivity of the fifth surface 35 and the sixth surface 36. The fifth surface 35 and the sixth surface 36 are disposed obliquely relative to the fourth surface 34, and both the third angle γ and the fourth angle δ are acute angles, to increase a quantity of reflection times of ineffective light, fold an optical path of the ineffective light on a light folding element 30H, and prevent the ineffective light from being emitted from the first surface 31 to the image sensor.

It may be understood that the third included angle γ formed between the fifth surface 35 and the fourth surface 34 may alternatively be an obtuse angle.

It may be understood that the fourth included angle δ formed between the sixth surface 36 and the fourth surface 34 may be a non-acute angle. For example, the sixth surface 36 may be approximately perpendicular to the fourth surface 34.

The following uses optical paths of ineffective light in several cases, for example, first ineffective light, second ineffective light, and third ineffective light in the light folding element 30H and an elongated trapezoidal prism, as examples for description and comparison. Incident angles at which the first ineffective light, the second ineffective light, and the third ineffective light enter a first surface of the light folding element or the elongated trapezoidal prism are different.

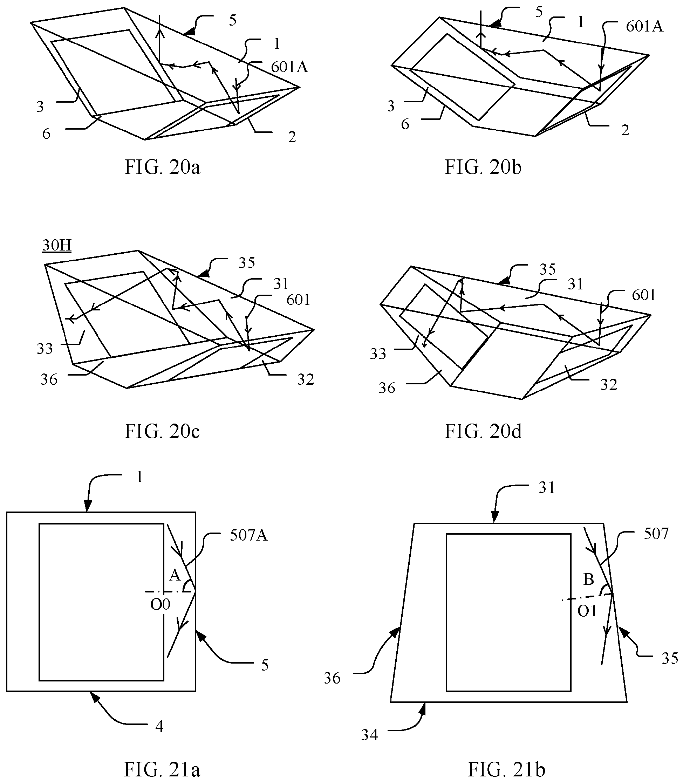

Refer to FIG. 20a to FIG. 20d. An optical path of first ineffective light 601A in an elongated trapezoidal prism 1000 is compared with an optical path of first ineffective light 601 in the light folding element 30H for description. An incident angle at which the first ineffective light 601 is incident to the first surface 31 is the same as an incident angle at which the first ineffective light 601A is incident to a first surface 1. Both the first ineffective light 601 and the first ineffective light 601A have a small incident field of view.

As shown in FIG. 20a and FIG. 20b, the elongated trapezoidal prism 1000 Hincludes the first surface 1, a second surface 2, a third surface 3, a fourth surface 4, a fifth surface 5, and a sixth surface 6. The first surface 1 and the fourth surface 4 are disposed opposite to and parallel to each other in a first direction (for example, a Z axis), and a length of the first surface 1 in a third direction is the same as a length of the fourth surface 4 in the third direction (for example, an X axis). The second surface 2 and the third surface 3 are spaced from each other in a second direction (for example, a Y axis). Both the fifth surface 5 and the sixth surface 6 are of rectangular structures. The fifth surface 5 and the fourth surface 4 are perpendicular to each other.

When the first ineffective light 601A with a small incident field of view enters the elongated trapezoidal prism 1000 Hthrough the first surface 1, the first ineffective light 601A is incident to the second surface 2, and the first ineffective light 601Ais reflected by the second surface 2 to the fifth surface 5 of an emergent end of the elongated trapezoidal prism 1000. The first ineffective light 601A reflected by the second surface 2 is at grazing incidence with the fifth surface 5, and reflectivity is high. Even if reflection reduction processing is performed on the fifth surface 5 (for example, the fifth surface 5 is coated with a light-absorbing layer), that is, the fifth surface 5 is a reflection reduction surface, the first ineffective light 601A is still totally reflected by the fifth surface 5 to the third surface 3. After being reflected by the third surface 33, the first ineffective light 601A is finally emitted from the elongated trapezoidal prism 1000 Hand is imaged on the image sensor. This affects imaging quality. The first ineffective light 601A is reflected four times in total.

In comparison with the elongated trapezoidal prism 1000, as shown in FIG. 20c and FIG. 20d, after entering the light folding element 30H through the first surface 31, the first ineffective light 601 with a small incident field of view is incident to the second surface 32. The first ineffective light 601 is reflected by the second surface 32 to the first surface 31. The first ineffective light 601 totally reflected by the first surface 31 is incident to the fifth surface 35 of an emergent end of the light folding element 30H, and then is reflected by the fifth surface 35 to the first surface 31. The first ineffective light 601 totally reflected by the first surface 31 is incident to the third surface 33, then reflected by the third surface 33 to the sixth surface 36, and finally absorbed by a light-absorbing layer on the sixth surface 36.

Because the third included angle γ between the fifth surface 35 and the fourth surface 34 is an acute angle, a normal line O1 on the fifth surface 35 and a normal line O0 on the fifth surface 5 are in different directions, and an incident angle (an included angle B shown in FIG. 21b) at which the first ineffective light 601 is incident to the fifth surface 35 is different from an incident angle (an included angle A shown in FIG. 21a) at which the first ineffective light 601A is incident to the fifth surface 5. Compared with an optical path of the first ineffective light 601A on the elongated trapezoidal prism 1000, an optical path of the first ineffective light 601 is modified, and a quantity of light folding times of the first ineffective light 601 in the light folding element 30F is greater than a quantity of light folding times of the first ineffective light 601A in the elongated trapezoidal prism 1000. In this way, the first ineffective light 601 can be finally eliminated or absorbed by the sixth surface 36 of the light folding element 30F (for example, absorbed by the light-absorbing layer).

Then, an optical path of second ineffective light 602A in the elongated trapezoidal prism 1000 His compared with an optical path of second ineffective light 602 in the light folding element 30H for description. An incident angle at which the second ineffective light 602 is incident to the first surface 31 is the same as an incident angle at which the second ineffective light 602A is incident to the first surface 1. Compared with incident field of views of the first ineffective light 601A and the first ineffective light 601, incident field of views of the second ineffective light 602A and the second ineffective light 602 are slightly larger.

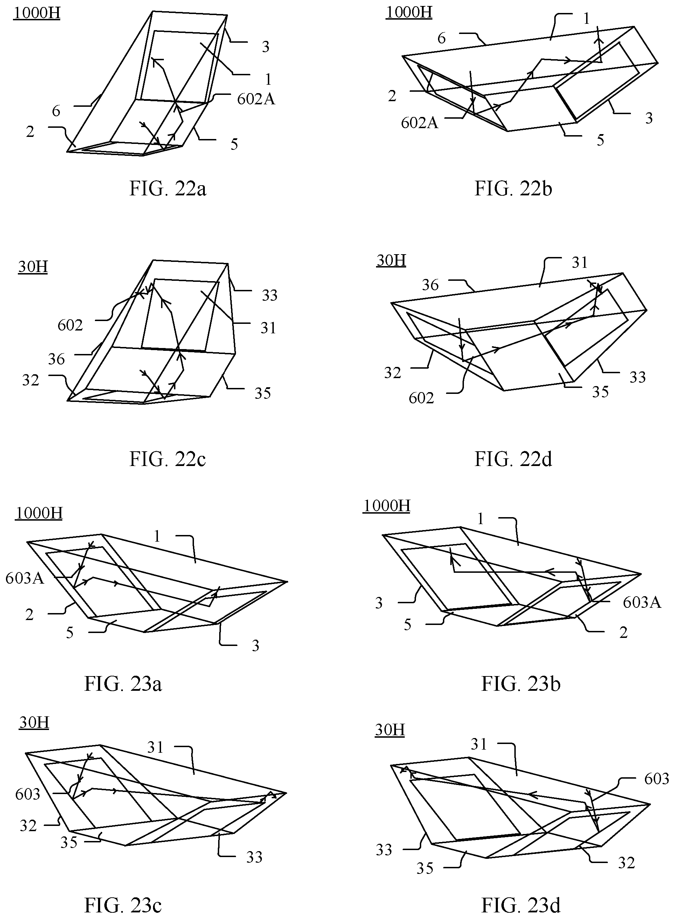

As shown in FIG. 22a and FIG. 22b, the second ineffective light 602A enters the elongated trapezoidal prism 1000 Hfrom the first surface 1. The second ineffective light 602A is reflected by the second surface 2 to the fifth surface 5 of an incident end of the elongated trapezoidal prism 1000. Because an incident angle of the second ineffective light 602A is large and reflectivity is large, the second ineffective light 602A is totally reflected on the fifth surface 5. After the second ineffective light 602Areflected by the fifth surface 5 is reflected by the first surface 1 and the third surface 3 in sequence, the second ineffective light 602A is emitted from the elongated trapezoidal prism 1000 Hand is imaged on the image sensor. This affects imaging quality.

As shown in FIG. 22c and FIG. 22d, the second ineffective light 602 is incident to the second surface 32 after entering the light folding element 30H through the first surface 31. The second ineffective light 602 is reflected by the second surface 32 to the fifth surface 35 of an incident end of the light folding element 30H. The second ineffective light 602 reflected by the fifth surface 35 is incident to the third surface 33, then reaches the sixth surface 36 after being reflected by the third surface 33, totally reflected by the first surface 31, and reflected by the third surface 33 in sequence, and is finally absorbed by the light-absorbing layer on the sixth surface 36. The third included angle γ between the fifth surface 35 and the fourth surface 34 is an acute angle, an incident angle at which the second ineffective light 602 is incident to the fifth surface 35 is modified, and a quantity of light folding times of the second ineffective light 602 in the light folding element 30F is greater than a quantity of light folding times of the second ineffective light 602A in the elongated trapezoidal prism 1000. In this way, the second ineffective light 602 can be finally eliminated or absorbed by the sixth surface 36 of the light folding element 30F (for example, absorbed by the light-absorbing layer).

In addition, an optical path of third ineffective light 603A in the elongated trapezoidal prism 1000 His compared with an optical path of third ineffective light 603 in the light folding element 30H for description. An incident angle at which the third ineffective light 603 is incident to the first surface 31 is the same as an incident angle at which the third ineffective light 603Ais incident to the first surface 1.

As shown in FIG. 23a and FIG. 23b, the third ineffective light 603A enters the elongated trapezoidal prism 1000 Hfrom the first surface 1. The third ineffective light 603A is reflected by the second surface 2 to the fifth surface 5 of the elongated trapezoidal prism 1000. Because an incident angle of the third ineffective light 603A is large and reflectivity is large, the third ineffective light 603A is totally reflected on the fifth surface 5. After the third ineffective light 603A reflected by the fifth surface 5 is reflected by the third surface 3, the third ineffective light 603A is emitted from the elongated trapezoidal prism 1000 Hand is imaged on the image sensor.

As shown in FIG. 23c and FIG. 23d, the third ineffective light 603 enters the light folding element 30H from the first surface 31. The third ineffective light 603 is reflected by the second surface 32 to the fifth surface 35 of the light folding element 30H. Because the third included angle γ between the fifth surface 35 and the fourth surface 34 is an acute angle, the third ineffective light 603 is reflected by the fifth surface 35 to the third surface 33, and then is reflected by the third surface 33 and the first surface 31 in sequence to reach a reflection reduction region of the third surface 33.

Compared with an optical path of the third ineffective light 603A on the elongated trapezoidal prism 1000, an optical path of the third ineffective light 603 is modified, and a quantity of light folding times of the third ineffective light 603 in the light folding element 30H is greater than a quantity of light folding times of the third ineffective light 603A in the elongated trapezoidal prism 1000. In this way, the third ineffective light 603 can be finally eliminated or absorbed by the reflection reduction region of the third surface 33 of the light folding element 30F (for example, absorbed by the light-absorbing layer).

It may be understood that, for ease of description, the light shielding structure is omitted in FIG. 20c and FIG. 20d, FIG. 22c and FIG. 22d, and FIG. 23c and FIG. 23d.

It may be understood that a shape and a structure of the light folding element 30H are not limited in this application.

It may be understood that the light shielding structure in the light folding element 30 may be omitted.

It may be understood that the implementations of this application may be combined with each other without conflict.

It should be understood that the expressions such as "include" and "may include" that can be used in this application represent existence of disclosed functions, operations, or constituent elements, and are not limited to one or more additional functions, operations, or constituent elements. In this application, the terms such as "include" and/or "have" can be construed as representing a particular feature, quantity, operation, constituent element, component, or a combination thereof, but cannot be construed as excluding existence or addition possibility of one or more other features, quantities, operations, constituent elements, components, or combinations thereof.

In addition, in this application, the expression "and/or" includes any and all combinations of words listed in association. For example, the expression "A and/or B" may include A, may include B, or may include both A and B.

In this application, expressions including ordinal numbers such as "first" and "second" may modify elements. However, such elements are not limited by the expressions. For example, the expressions do not limit the order and/or importance of the elements. The expression is used only to distinguish one element from another. For example, first user equipment and second user equipment indicate different user equipment, although both the first user equipment and the second user equipment are user equipment. Similarly, without departing from the scope of this application, a first element may be referred to as a second element, and similarly, a second element may also be referred to as a first element.

When a component is referred to as "being connected to" or "accessing" another component, it should be understood that the component may be directly connected to or access the another component, or there may be another component between the component and the another component. In addition, when a component is referred to as "being directly connected to" or "directly accessing" another component, it should be understood that there is no component between the component and the another component.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An optical system, comprising:
a lens group; and
a light folding element, comprising a first surface, a second surface, a third surface, and a fourth surface, wherein the first surface and the fourth surface are disposed opposite to each other, the second surface is connected between the first surface and the fourth surface, the third surface is connected between the first surface and the fourth surface, light entering the optical system comprises effective light and ineffective light, and effective light passing through the lens group is capable of being transmitted into the light folding element through the first surface, is reflected by the second surface, the first surface, and the third surface in sequence, and then leaves from the first surface to the outside of the light folding element, wherein
the light folding element further comprises a first light shielding structure, and the first light shielding structure is disposed on a side that is of the fourth surface and that faces the first surface, and is configured to prevent at least a part of ineffective light in the light folding element from being transmitted to the outside of the light folding element through the first surface.

2. The optical system according to claim 1, wherein the fourth surface is provided with an opening groove extending toward the first surface, and the first light shielding structure is located in the opening groove.

3. The optical system according to claim 1, wherein the optical system further comprises a second light shielding structure, the second light shielding structure is disposed on the side that is of the fourth surface and that faces the first surface, and the second light shielding structure and the first light shielding structure are spaced from each other.

4. The optical system according to claim 3, wherein the first surface and the fourth surface are disposed opposite to each other in a first direction, the second surface and the third surface are spaced from each other in a second direction different from the first direction, and the optical system further comprises a third light shielding structure;
in the second direction, the first light shielding structure is located between the second light shielding structure and the third light shielding structure; and
in the first direction, a height of the first light shielding structure is greater than a height of the second light shielding structure, the height of the first light shielding structure is greater than a height of the third light shielding structure, and the first light shielding structure, the second light shielding structure, and the third light shielding structure are located outside an effective field of view of the effective light.

5. The optical system according to claim 1, wherein the light folding element comprises a first prism and a second prism that are joined together, and the first light shielding structure is located between the first prism and the second prism.

6. The optical system according to any one of claims 1 to 5, wherein the light folding element further comprises a fifth surface, the fifth surface is connected between the first surface and the fourth surface, the fifth surface is connected between the second surface and the third surface, and the fifth surface is a reflection reduction surface and is configured to reduce reflection of light incident to the fifth surface.

7. The optical system according to claim 6, wherein the fifth surface is disposed obliquely relative to the fourth surface.

8. The optical system according to any one of claims 1 to 7, wherein the first surface comprises an incident region and an emergent region, light is capable of penetrating into the light folding element through the incident region, light is capable of leaving the light folding element through the emergent region, the incident region is disposed at an end that is of the first surface and that is close to the second surface, and the emergent region is disposed at an end that is of the first surface and that is close to the third surface.

9. The optical system according to claim 8, wherein the optical system further comprises a light shielding body, the light shielding body covers the first surface, the light shielding body is located between the incident region and the emergent region, and the light shielding body is exposed between the incident region and the emergent region.

10. The optical system according to claim 9, wherein the light shielding body 70 comprises a first light transmission region , a second light transmission region, and a light shielding region, the light shielding region is disposed around the first light transmission region and the second light transmission region, a location of the first light transmission region corresponds to a location of the incident region, a location of the second light transmission region corresponds to a location of the emergent region, light is capable of being incident to the incident region through the first light transmission region, and light leaving the emergent region is capable of being emitted through the second light transmission region.

11. The optical system according to any one of claims 1 to 10, wherein both the second surface and the third surface comprise a reflection region and a reflection reduction region disposed around the reflection region, the reflection region is configured to reflect light, and the reflection reduction region is configured to reduce reflection of light incident to the reflection reduction region.

12. The optical system according to any one of claims 1 to 11, wherein a chamfered reflection reduction surface is connected between the first surface and the second surface, and/or a chamfered reflection reduction surface is connected between the first surface and the third surface, and the chamfered reflection reduction surface is configured to reduce reflection of light incident to the chamfered reflection reduction surface.

13. The optical system according to any one of claims 1 to 12, wherein the fourth surface comprises a reflection reduction surface.

14. A camera, comprising the optical system according to any one of claims 1 to 13 and an image sensor, wherein the lens group of the optical system is disposed facing the first surface of the optical system, the image sensor is disposed facing the first surface of the optical system, and effective light passing through the lens group is capable of being transmitted into the light folding element through the first surface, is reflected by the second surface of the light folding element, the first surface, and the third surface of the light folding element in sequence, and then leaves the light folding element from the first surface and reaches the image sensor.

15. A device, comprising the camera according to claim 14 and a housing, wherein the camera is mounted on the housing.
